# EUROPEAN PATENT SPECIFICATION

(11) **EP 4 111 315 B1**
(45) Date of publication and mention of the grant of the patent: **05.11.2025**
(21) Application number: 20725401.2
(22) Date of filing: 28.04.2020
(51) Int. Cl.: G06F 11/36

(54) **RENDERING DEBUGGER**
RENDERING-DEBUGGER
DÉBOGUEUR DE RENDU

(43) Date of publication of application: 04.01.2023
(73) Proprietor: Google LLC, Mountain View, CA 94043 (US)
(72) Inventor: JOHNSON, Spencer Scott, Mountain View, California 94043 (US); YUAN, Mengyu, Mountain View, California 94043 (US); WASSERMAN, Jonah Benjamin, Mountain View, California 94043 (US); KLAFURIC, Ryan Daniel, Mountain View, California 94043 (US); KAMIS, Samsudin, Mountain View, California 94043 (US); BASAK, Suman, Mountain View, California 94043 (US); LI, Jingyi, Mountain View, California 94043 (US)
(74) Representative: Marks & Clerk GST
(86) International application number: PCT/US2020/030270
(87) International publication number: WO 2021/221616

(56) References cited:
- US-A1- 2016 077 955
- US-A1- 2016 179 658
- US-A1- 2020 034 281
- US-B1- 9 164 874
- US-B1- 9 218 267

## Description

### BACKGROUND

This specification relates to data processing and debugging an application.

The Internet facilitates the exchange of information between users across the globe. This exchange of information enables distribution of content to a variety of users. In some situations, content from multiple different providers can be integrated into a single electronic document to create a composite document. For example, a portion of the content included in the electronic document may be selected (or specified) by a publisher of the electronic document. A digital component (e.g., a different portion of content) can be provided by a third-party (e.g., an entity that is not a publisher of the electronic document), and integrated into the electronic document with the portion of content selected by the publisher.

US 9164874 describes testing of software able to render a content item on a display of an electronic device. The testing may include capturing images of rendered portions of a content item and comparing the captured images with previously obtained reference images that have been verified to be correctly rendered. The testing techniques can be applied to conversion software that converts digital content items from one format to another and/or testing of the converted content items themselves. Additionally, content presentation software that displays digital content items on an electronic device, such as by interacting with rendering software, may also be tested using a similar technique. This document discloses a method for rendering digital content by an application executing a the device; obtaining from the application rendering attributes of the digital content; invoking a validation process of the rendering attributes and determining that one or more requirements are not met.

US 9218267 describes page rendering feedback technology. A page component and a script are sent to a rendering device as elements of a page. Feedback is received from the script regarding positional rendering information for the page component within the page. The component position may also be compared with a model component layout position to determine whether the component position was correctly rendered.

US 2016/077955 describes a system, method and program product for testing responsive user interface logic within an application.

US 2016/179658 describes an automated test for testing a software system including a graphical user interface (GUI) including a particular GUI element, where the automated test is to simulate user interactions with at least the particular GUI element.

US 2020/034281 describes a system for automated mobile application testing and activity monitoring where the mobile app runs on one of a plurality of available mobile devices running an operating system supported by the testing system.

### SUMMARY

The invention is defined by the appended independent claims. Advantageous embodiments are defined in the dependent claims. In general, one innovative aspect of the subject matter described in this specification is embodied in systems that include detecting, by a device, rendering of a digital component by an application executing on the device; obtaining, from the application, a set of signals specifying rendering attributes of the digital component including at least first signals indicative of visible attributes of content assets that are included in the test digital component and second signals indicative of hierarchical associations between the content assets as rendered; invoking, by the device, a validation process the compares the first signals and the second signals to a set of requirements that specify attributes of compliant digital components that have been rendered correctly; determining that one or more requirements are not met by the first signals or the second signals; and in response to determining that the one or more requirements are not met, providing, by the device, a non-compliant overlay that provides, within the application, an alert indicating that the digital component fails to comply with the one or more requirements. Other embodiments of this aspect include corresponding methods, apparatus, and computer programs, configured to perform the actions of the methods, encoded on computer storage devices. These and other embodiments can each optionally include one or more of the following features.

Methods can include receiving, by a server, a registration message identifying the device as a test device for the application; receiving, from the device, a request for content to provide to the application; selecting, by the server, a test object including the content assets that are required to render the digital component based on the device being identified as a test device; and providing, by the server, the test object to the device responsive to the request for content based on the device being identified as a test device.

Methods can include receiving, by a server, a request for content to provide to the application; determining, by the server, that the request for content includes an identifier corresponding to a test environment; in response to determining that the request for content includes the identifier corresponding to the test environment, selecting, by the server, a test object including the content assets that are required to render the digital component; and providing, by the server, the test object to the device responsive to the content request.

Invoking, by the device, a validation process the compares the first signals and the second signals to a set of requirements can include requesting execution of the validation process by a script instantiated at launch of the application.

Methods can include detecting interaction with the overlay; and in response to detecting interaction with the overlay, providing additional details regarding how the digital component fails to comply with the one or more requirements.

Methods can include obtaining, by the device, a document from a specified location; and populating the document with information indicating that the digital component fails to comply with the one or more requirements.

Obtaining a set of signals specifying rendering attributes of the digital component can include obtaining a set of signals indicating a set of content assets included in the digital component; and determining that one or more requirements are not met comprises (i) determining that required assets are not included or not properly registered with the software development kit, (ii) determining that a particular view that includes the content assets has less than a specified size, or (iii) determining that one or more of the content assets are located outside of boundaries of the particular view.

Particular embodiments of the subject matter described in this specification can be implemented so as to realize one or more of the following advantages. For example, the techniques discussed in this document enable the identification of errors in rendering code of an application prior to release of the application to users, thereby reducing wasted system resources. More specifically, for applications that are responsible for properly constructing and presenting a digital component from a set of content assets provided by a third party, conventional systems provide no way for the application developer to ensure that the rendering code of the application has been implemented correctly prior to releasing the application to users. As such, an application developer has historically only learned of errors in their rendering code after the rendering code has incorrectly rendered (or failed to render) digital components to users. This creates a situation in which the application developer must track down the errors, correct the rendering code, and then offer an updated version of the application for download by the users. However, due to the control that users have over application updates, the application developer cannot ensure that users will update to the new version of the application, such that the rendering errors can continue. As discussed in more detail below, one such rendering error is an error that results in a portion of the content occluding other content that should have been visible to the user. In this situation, the rendering errors lead to a less efficient and less effective application because only a portion of the content that should have been visually perceptible by the user is capable of being perceived. These rendering errors also lead to inefficiencies related to the use of computing resources (e.g., memory, processing capability, network bandwidth, etc.). For example, when memory, processing resources, and network bandwidth are utilized to select and transmit content assets to an application that will ultimately a digital component that occludes, omits, or otherwise distorts the content assets in a manner that prevents the user from being able to perceive information provided by one or more of the content assets, these computing resources are not available to distribute content assets to other applications that would properly render the content assets in a digital component. As the number of users of an application increase, the amount of wasted resources increase. Because the number of application users can quickly reach millions of users, the aggregated impact (e.g., wasted system resources) caused by these inefficiencies quickly rise. As discussed in detail below, the techniques presented throughout this document reduce the inefficiencies discussed, and result in improved allocation and usage of computing resources by ensuring proper operation of the rendering code of applications prior to their distribution to users.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which content is distributed.
FIG. 2A is a block diagram illustrating testing rendering code that generates a compliant digital component.
FIG. 2B is a block diagram illustrating testing rendering code that generates a non-compliant digital component.
FIG. 3 is a flow chart of an example process for testing rendering code.
FIG. 4 is a flow chart of an example process for providing a test object to an application executing on a client device.
FIG. 5 is a block diagram of an example computing device.

Like reference numbers and designations in the various drawings indicate like elements.

### DETAILED DESCRIPTION

This document discloses methods, systems, and devices that may be used to facilitate debugging of an application (e.g., native mobile application). As discussed in more detail below, rendering code that assembles and presents portions of content as a digital component within an application environment can be tested, and results of the testing can be provided to a developer of the application prior to the application being released to users. For example, the rendering code that is tested can be developed to comply with specifications of a digital component distribution system ("DCDS") that provides the portions of content for rendering by the application.

More specifically, the rendering code of the application may specify a layout among the different portions of content (referred to going forward as content assets) received from the DCDS, obtain the content assets from a software development kit ("SDK"), and bind a hierarchy of views to the content assets. Thus, unlike situations in which a completed digital component is provided for presentation "as is" to a web page or an application, the rendering code of the application is responsible for combining the content assets in a way that complies with the specifications of the DCDS, which are also generally enforced by the DCDS, such that the application developer may need implement rendering code that will combine the content assets into a digital component that complies with the specifications of the DCDS.

Prior to distribution of the completed application to users, the application developer generally has no way to ensure that the rendering code that they have implemented will actually generate a digital component that complies with the specifications of the DCDS. Additionally, the application developer generally cannot "force" users to update their application to a new version, thereby leaving the application developer reliant on users voluntarily updating to a new version of the application in order to fix problems that may exist in the rendering code. Furthermore, the inability of the application developer to test the rendering code before releasing the application to users also prevents the application developer from testing updated versions of the rendering code without releasing the updated version of the application to users, meaning that the updates to the rendering code that are included in the updated version of the application could still fail to fix identified issues, and could result in further issues that prevent the digital components rendered by the application from complying with the specifications of the DCDS. Thus, it can be difficult for application developers to implement rendering code that enables third party content to be presented as native (e.g., first party) content within their applications.

As discussed in detail throughout this document, the SDK (or other components) used to provide the content assets to the application can be configured to include logic that detects issues with rendering code of an application before the application is released to users. In some implementations, the SDK can pass a test object (e.g., including a set of content assets) to the application, and collect, from the application, rendering signals (referred to as a set of signals) corresponding to the resulting digital component that is rendered by the application using the test object. These rendering signals generally provide information about the structure and visual attributes of the resulting digital component. These rendering signals can be compared to a set of compliance requirements (also referred to as a set of requirements) to determine whether the resulting digital component created by the rendering code complies with the specifications of the DCDS. When the resulting digital component fails to pass the compliance checks, an overlay specifying the non-compliant status of the resulting digital component and/or information about the issues that led to the non-compliant status can be presented in the application. This information can then be used by the application developer to revise the rendering code, and any revisions to the rendering code can continue to be tested to ensure that the rendering code produces a compliant digital component before the application is made available to users.

As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. Generally, a digital component is defined by (or provided by) a single provider or source (e.g., an advertiser, publisher, or other content provider). As discussed in more detail below, an application can render a digital component as a native element within the application by combining multiple different content assets using rendering code that is part of the application. For example, the rendering code can bind the content assets to various views, and associations between those views will dictate how the application presents the content assets together as a digital component within the application.

This document refers to an SDK performing various operations, but it should be understood that the operations discussed in this document could be performed by various components of a device that is executing an application.

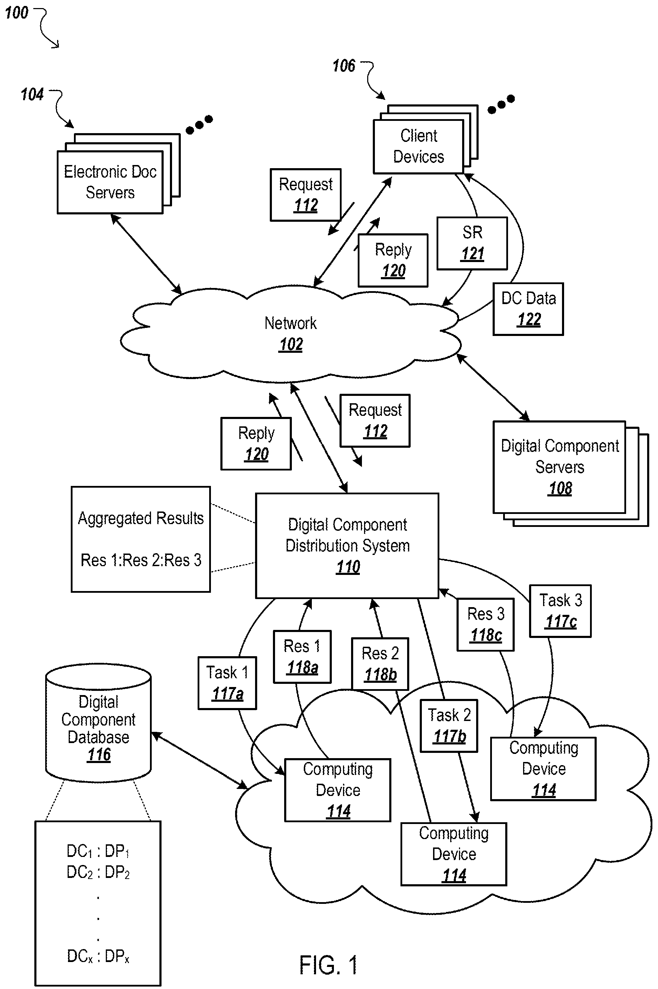

FIG. 1 is a block diagram of an example environment 100 in which content is distributed to client devices. The example environment 100 includes a network 102, such as a local area network (LAN), a wide area network (WAN), the Internet, or a combination thereof. The network 102 connects client devices 106, digital component servers 108, and a digital component distribution system 110 (also referred to as a distribution system). The example environment 100 may include many different client devices 106, and digital component servers 108.

A client device 106 is an electronic device that is capable of requesting and receiving resources over the network 102. Example client devices 106 include personal computers, mobile communication devices, and other devices that can send and receive data over the network 102. A client device 106 typically includes a user application, such as a web browser, to facilitate the sending and receiving of data over the network 102, but native applications executed by the client device 106 can also facilitate the sending and receiving of data over the network 102.

An electronic document is data that presents a set of content at a client device 106. Examples of electronic documents include webpages, word processing documents, portable document format (PDF) documents, images, videos, search results pages, and feed sources. Native applications (e.g., "apps"), such as applications installed on mobile, tablet, or desktop computing devices are also examples of electronic documents. Electronic documents can be provided to client devices 106 by electronic document servers 104 ("Electronic Doc Servers"). For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download native applications. In this example, the client device 106 can download files required to install an app at the client device 106, and then execute the downloaded native application locally at the client device 106.

Electronic documents can include a variety of content. For example, an electronic document can include static content (e.g., text or other specified content) that is within the electronic document itself and/or does not change over time. Electronic documents can also include dynamic content that may change over time and/or on a per-request basis. For example, a publisher of a given electronic document can maintain a data source that is used to populate portions of the electronic document. In this example, the given electronic document can include a tag or script that causes the client device 106 to request content from the data source when the given electronic document is processed (e.g., rendered or executed) by a client device 106. The client device 106 integrates the content obtained from the data source into the given electronic document to create a composite electronic document including the content obtained from the data source.

In some situations, a given electronic document can include a digital component tag or digital component script that references the digital component distribution system 110. In these situations, the digital component tag or digital component script is executed by the client device 106 when the given electronic document is processed by the client device 106. Execution of the digital component tag or digital component script configures the client device 106 to generate a request for digital components 112 (referred to as a "component request"), which is transmitted over the network 102 to the digital component distribution system 110. For example, the digital component tag or digital component script can enable the client device 106 to generate a packetized data request including a header and payload data. The component request 112 can include event data specifying features such as a name (or network location) of a server from which the digital component is being requested, a name (or network location) of the requesting device (e.g., the client device 106), and/or information that the digital component distribution system 110 can use to select one or more digital components provided in response to the request. The component request 112 is transmitted, by the client device 106, over the network 102 (e.g., a telecommunications network) to a server of the digital component distribution system 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the digital component distribution system 110. Similarly, event data specifying keywords associated with the electronic document ("document keywords") or entities (e.g., people, places, or things) that are referenced by the electronic document can also be included in the component request 112 (e.g., as payload data) and provided to the digital component distribution system 110 to facilitate identification of digital components that are eligible for presentation with the electronic document. The event data can also include a search query that was submitted from the client device 106 to obtain a search results page, and/or data specifying search results and/or textual, audible, or other visual content that is included in the search results.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The distribution system 110, which includes one or more digital component distribution servers (e.g., a combination of computing hardware and software), chooses digital components that will be presented with the given electronic document in response to receiving the component request 112 and/or using information included in the component request 112. In some implementations, a digital component is selected in less than a second to avoid errors that could be caused by delayed selection of the digital component. For example, delays in providing digital components in response to a component request 112 can result in electronic document load errors at the client device 106 or cause portions of the electronic document to remain unpopulated even after other portions of the electronic document are presented at the client device 106. Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the distribution system 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC₁₋ₓ). The millions of available digital components can be indexed, for example, in a digital component database 116. Each digital component index entry can reference the corresponding digital component and/or include distribution parameters (DP₁-DPₓ) that contribute to (e.g., condition or limit) the distribution/transmission of the corresponding digital component. For example, the distribution parameters can contribute to the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, or terms specified in the component request 112) in order for the digital component to be eligible for presentation. The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation.

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the digital component distribution system 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The digital component distribution system 110 aggregates the results 118a-118c received from the set of multiple computing devices 114 and uses information associated with the aggregated results to select one or more digital components that will be provided in response to the request 112. For example, the digital component distribution system 110 can select a set of winning digital components (one or more digital components) based on the outcome of one or more component evaluation processes. In turn, the digital component distribution system 110 can generate and transmit, over the network 102, reply data 120 (e.g., digital data representing a reply) that enable the client device 106 to integrate the set of winning digital components into the given electronic document, such that the set of winning digital components and the content of the electronic document are presented together at a display of the client device 106.

In some implementations, the client device 106 executes instructions included in the reply data 120, which configures and enables the client device 106 to obtain the set of winning digital components from one or more digital component servers. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

Conventional systems may provide preconfigured digital components for presentation at client devices 106. For example, the digital component data 122 may include a digital component that includes a preconfigured arrangement of content assets that dictate how the digital component will be presented at the client device 106. In this example, neither the client device 106 nor an application executing on the client device will be able to rearrange the location of various content assets presented within a digital component or modify the look and feel of the various elements of the digital component. Rather, when a preconfigured digital component is provided for presentation within an application executing on the client device 106, the application will simply present the preconfigured digital component as received.

The use of preconfigured digital components for presentation within native applications (or other electronic documents) limits the ability of an application developer (or developer of other electronic documents) to customize the presentation of the digital component to complement the visual appearance of the application or even to adjust the content assets based on display characteristics of the client device 106. This can lead to presentation of digital components that are disruptive, jumbled, illegible, or otherwise unable to be adequately perceived by users. This can lead to technical inefficiencies because substantial network resources are being used to select and distribute digital components that fail to convey the information they are intended to convey. This leads to wasted network bandwidth by transmitting these illegible digital components over the network 102, wasted memory by storing the digital components within the digital component database 116 and by storing the delivered digital components at the client device, and a waste of limited display space at the client device through presentation of the illegible digital components where otherwise useful information could have been presented.

In some situations, native applications (or other electronic documents) can be configured to accept an unassembled set of content assets and render those content assets as a resulting digital component. In these situations, the application is provided the flexibility to arrange and format the content assets based on the environment in which the resulting digital component will be presented, such that the resulting digital component will be more legible and less disruptive to the user experience. Additionally, the ability of the application to render the digital component can help eliminate the technical inefficiencies that may be encountered when preconfigured digital components are distributed to applications.

While giving applications the ability to combine content assets into a resulting digital component can provide advantages over traditional preconfigured digital components, it can also lead to other issues. For example, if the application developer does not correctly implement the rendering code responsible for rendering the resulting digital component, the resulting digital component can have similar issues as those discussed above with reference to preconfigured digital component, which can also lead to the same technical inefficiencies discussed above. Additionally, if the rendering code is not implemented correctly, the digital component may fail to be presented altogether, leading to further wasted network bandwidth, processing resources, and memory resources.

Compounding the potential issues discussed above is the fact that some systems do not provide any way for application developers to test their rendering code prior to the application being released to users. Rather, application developers are required to implement rendering code that they believe will generate resulting digital components that comply with specifications of the DCDS 110, distribute the application to users, and wait for feedback from the DCDS 110 if their rendering code is not generating compliant digital components (i.e., resulting digital components that comply with the specifications of the DCDS). This can also result in illegible, or otherwise faulty, digital components that can lead to technical issues similar to those discussed above (e.g., wasted network bandwidth, wasted memory, and wasted display space). This can also lead to additional wasted network bandwidth if users are required to download a new version of the application to correct errors in the rendering code.

As discussed in more detail below, an SDK of a client device can be modified to facilitate testing of rendering code and application rendering of digital components prior to distribution of the application to users. For example, when the application renders a test digital component, also referred to as a digital component, using a test object that includes a set of content assets, the SDK can collect a set of signals specifying rendering attributes of the test digital component (e.g., the digital component generated using the set of content assets in the test object). The SDK can then invoke a validation process that compares the set of signals to a set of compliance requirements (e.g., specified by the DCDS), and determines whether the compliance requirements are met. If the compliance requirements are not met, an overlay can be generated and presented within the application informing the application developer of any issues with the rendering of the test digital component so that the application developer can revise the rendering code. This testing can continue until the rendering code produces a test digital component that meets all of the compliance requirements. The application developer can then distribute their application with the confidence that the digital components rendered by the rendering code will comply with the compliance requirements, and avoid the technical issues discussed above.

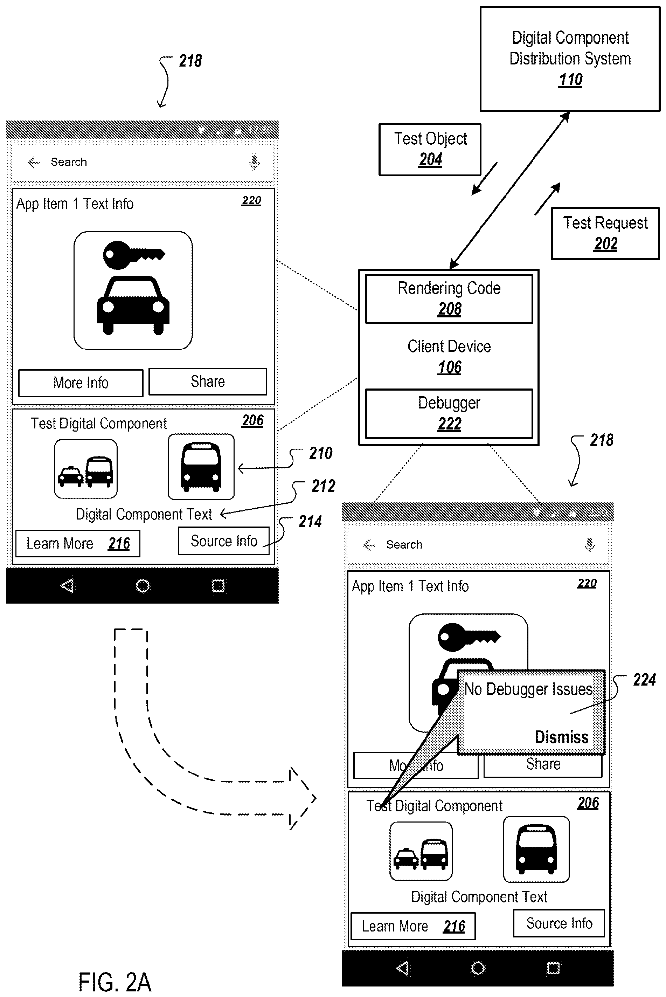

FIG. 2A is a block diagram illustrating testing rendering code that generates a compliant digital component. In FIG. 2A, the client device 106 initiates a test request 202 that is transmitted to the DCDS 110. The test request is a request to receive content to present (i.e., display) in an application executing on the client device 106. The test request can be triggered, for example, when the application developer interacts with the application (e.g., launches the application), and manipulates the application to a state where the application provides (or otherwise makes available) a slot in which a digital component can be presented. For example, when a single pixel of the slot reserved for the digital component is present in the display of the client device 106, a script can be triggered, which generates and transmits a request for content to be presented in the slot.

In some situations, the test request will include a unique identifier corresponding to a test digital component. The test digital component can be a digital component that is reserved for delivery to applications to test the rendering code of the application. For example, the test digital component can include a known set of content assets that can be reliably evaluated by the SDK of the client device during testing. The unique identifier can be a specified set of alphanumeric characters that uniquely identify the test digital component so that application developers can configure the script triggered by provision of the slot reserved for the digital component to request the test digital component using the unique identifier.

In some implementations, rather than or in addition to, using the unique identifier of the test digital component, the application developer can preregister or otherwise identify the client device 106 as a test device. For example, the application developer can interact with a user interface of the DCDS 110, and register the client device 106 as a test device by supplying a device identifier of the client device. Later, when the DCDS 110 receives the test request 202 from the client device 106, the DCDS 110 can identify the client device 106 as a test device (e.g., based on the device identifier being included in the test request 202).

The DCDS 110 receives the test request 202 from the client device 106, and selects a test object 204 to provide to the client device 106 in response to the test request 202. The test object includes a set of content assets that are required to render the test digital component. For example, the set of content assets may include one or more images, one or more videos, text content, interactive user interface elements, or other content assets. Each of the content assets can be identified by an asset code that identifies the type of content included in the content asset and/or other information useful for rendering the content asset or combining the content assets into the test digital component.

The client device 106 obtains the test object 204 from the DCDS 110 (e.g., over a network), and renders the test digital component 206 using the rendering code 208 of the application executing on the client device 106. As shown in FIG. 2A, the test digital component 206 is constructed using content assets including two images 210, text 212, a source information element 214 identifying the source of the test digital component, and an interactive element 216 (e.g., a learn more button) that initiates a request for more information about the test digital component in response to user interaction with the interactive element 216. Of course, the test digital component (or any digital component) could include additional, fewer, or different content assets than those discussed here.

The test digital component 206 is provided (e.g., presented or otherwise made available) in an interface 218 of the application executing on the client device 106 with native content 220 of the application. When the rendering code 208 renders the test digital component 206 in the interface 218, a debugger 222 detects the provision of the test digital component, and invokes a validation process by which the compliance of the test digital component is evaluated. In some situations, the validation process is only triggered when the test digital component is actually presented in the display. In other situations, other events can trigger the validation process (e.g., developer interaction with a button that invokes the validation process). Note that while the debugger 222 is shown as a separate component relative to the rendering code 208, these two components may be implemented within a same codebase.

As described in more detail below, the compliance of the test digital component is evaluated based on whether a set of signals specifying the rendering attributes (e.g., structural and/or presentation attributes) of the test digital component satisfy a set of compliance requirements that specify attributes of compliant digital components that have been rendered correctly. The set of compliance requirements can be dictated by the DCDS 110 and/or another system or entity that is responsible for ensuring the compliance of digital components with a set of specifications.

In some implementations, the debugger 222 can be implemented in an SDK that is installed on the client device 106. For example, the debugger 222 can be included in an SDK that is provided by the DCDS 110 or another system that provides digital components to the client device 106. In these implementations, the application under test (e.g., the application executing the rendering code 208) can provide the SDK a signal indicating that the test digital component has been rendered in the interface 218. In response to this indication, the SDK can collect (or otherwise obtain) a set of signals characterizing the presentation and/or structure of the test digital component as rendered by the rendering code 208. The set of signals can specify, for example, the hierarchical associations of different views that are used to present the different content assets (e.g., bindings between content assets and parent view and child views), locations of the different content assets within the test digital component 206, a size of the display being used to display the interface 218, a relative presentation location of the test digital component 206 within the interface 218 and/or display, a presentation size / resolution of the test digital component 206, locations of content assets within the test digital component 206, and/or status information related to interactive features utilized by the test digital component 206 (e.g., perform click events, touch events, touch listeners).

The validation process compares the set of signals to the set of compliance requirements to determine whether the test digital component 206 rendered using the rendering code 208 satisfies the compliance requirements. For purposes of the present example, it is assumed that the test digital component 206 presented in FIG. 2A satisfies all of the compliance requirements, such that the test digital component 206 is deemed to be a compliant digital component.

In some implementations, the SDK can invoke the validation process by performing operations of the validation process. In some implementations, the validation process is invoked by the SDK through a call to a script that has been downloaded to the client device 106. Having the validation process implemented in a script separate from the SDK provides the ability to modify the validation process without having to update the SDK. For example, when the application is launched, the script can be downloaded or launched for use by the SDK, such that any updates to the validation process can be implemented by downloading an updated version of the script. In these implementations, the SDK can request that the script perform the validation process and pass the set of signals obtained from the application to the script. When the script completes the validation process (e.g., comparing the set of signals obtained from the application to the set of compliance requirements), the script can pass the results of the validation process back to the SDK, which can then generate an overlay that reports the results of the validation process. In some situations, the SDK requests a shell document for the overlay from a server (e.g., the DCDS 110), populates the shell document with the results of the validation process, and provides the populated shell document as an overlay in the interface 218.

For example, when the debugger 222 determines that the test digital component 206 is a compliant digital component, the debugger can generate an overlay 224 that is provided in the interface 218, and informs the application developer that no compliance issues were detected. With this information, the application developer can proceed to release their application knowing that the rendering code 208 will generate compliant digital components when the application is used by various users who download the application.

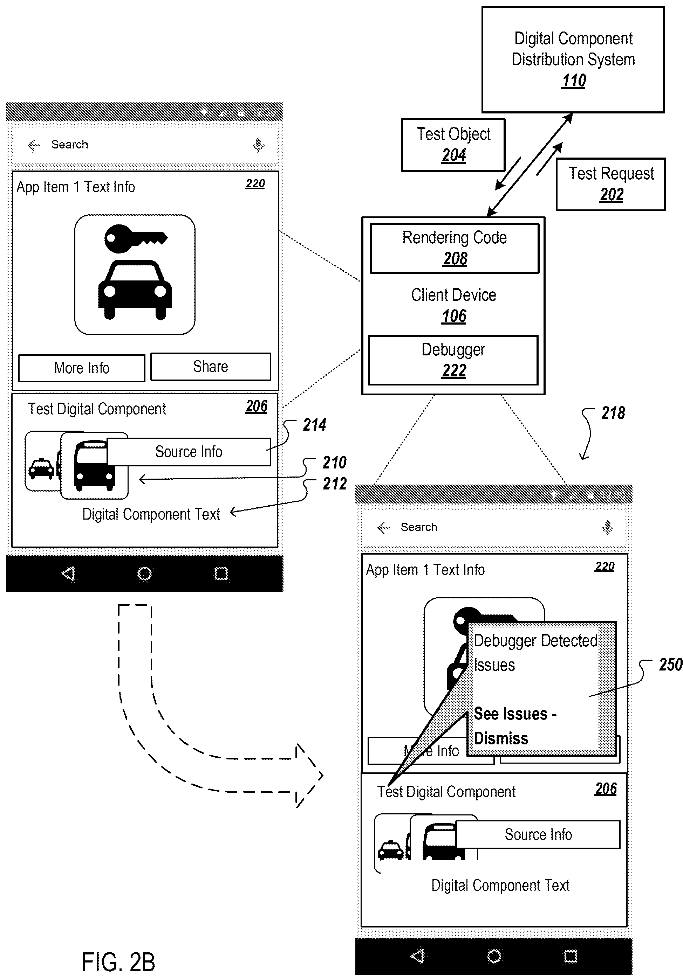

FIG. 2B is a block diagram illustrating testing rendering code that generates a non-compliant digital component. In FIG. 2B, the client device 106 again initiates a test request 202 that is transmitted to the DCDS 110, and the test object 204 is provided to the client device 106 in a manner similar to that discussed above with reference to FIG. 2A. The debugger 222 again collects the set of signals about the test digital component 206 from the application, and invokes the validation process.

In FIG. 2B, the set of signals characterizing the test digital component 206 will reveal that the images 210 are overlapping and partially occluded by the source information element 214. Assume, for purposes of this example, the set of signals identifying these rendering attributes of the test digital component 206, as rendered by the rendering code 208, fail to satisfy the set of compliance requirements. In response to determining that one or more of the compliance requirements are not met, the debugger 222 (e.g., the SDK) can generate and provide a non-compliant overlay 250 that is presented in the interface 218 of the application. The non-compliant overlay 250 includes data informing the application developer that the debugger identified compliance issues with the test digital component 206 that was rendered by the rendering code 208. The non-compliant overlay 250 includes an interactive element (e.g., "See Issues" link) that will provide additional information about the issues identified by the debugger 222 in response to interaction with the interactive element by the application developer. As such, the application developer can be provided with information as to the issues identified by the debugger 222 and/or information specifying how the application developer can correct the issues by modifying the rendering code 208.

Examples of information that can be provided to the application developer in response to interaction with the interactive element of the non-compliant overlay 250 include information indicating that the layout of the content assets within the test digital component 206 may cause a user to accidentally click (or tap) the test digital component. The information can also inform the application developer when the resolution of the test digital component is too low, such that the DCDS 110 will not distribute digital components to the application if the application is distributed to users without modifying the rendering code 208. The information can also inform the application developer when there are missing content assets. For example, in FIG. 2B, the test digital component 206 is missing the interactive element 216 that is included in the test object 204, and was presented in the compliant digital component presented in FIG. 2A. The information can also inform the application developer that the test digital component 206 has been rendered in a manner that has made a particular content asset clickable when the compliance requirements forbid that particular content asset from being made clickable. All of this information will enable the application developer to modify the rendering code 208 to render content assets in the form of a compliant digital component, as shown in FIG. 2A.

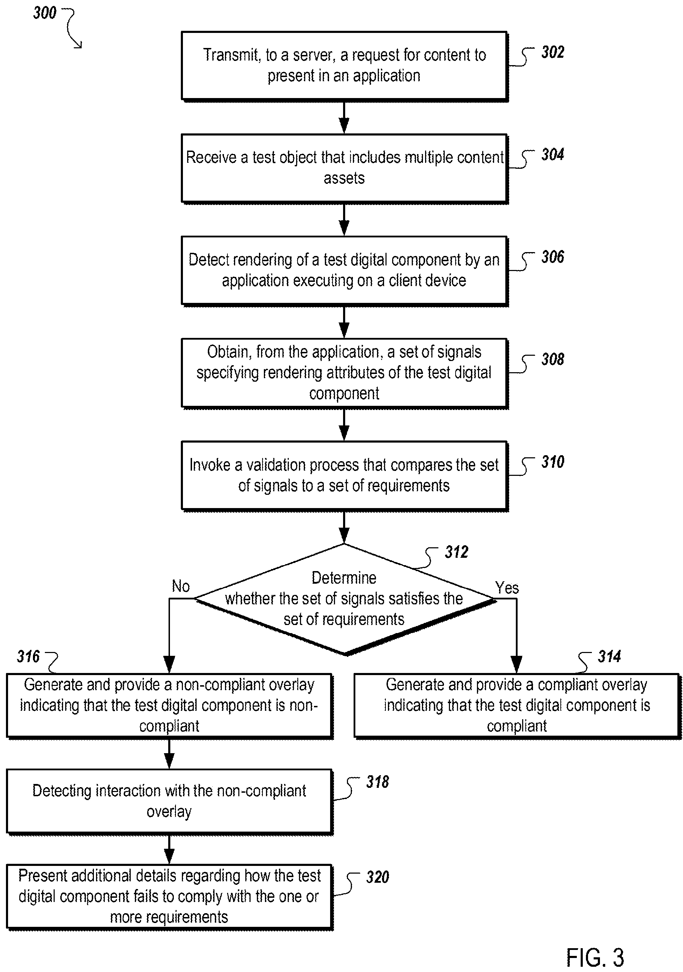

FIG. 3 is a flow chart of an example process 300 for testing compliance of rendering code. The process 300 can be performed by one or more computing devices. For example, operations of the process 300 can be performed by a client device and/or an SDK executing on the client device. Operations of the process 300 can also be implemented as instructions stored on a non-transitory computer readable medium, and when the instructions are executed by one or more servers (or other computing devices), the instructions cause the one or more servers to perform operations of the process 300.

A request for content to provide to and/or present in an application is transmitted to a server (302). In some implementations, the request for content is a request for a test object that can be used to test operation of rendering code implemented in a native application. The test object includes content assets that are required to render a test digital component, which is also simply referred to as a digital component. For example, the test object can include one or more of images, text, videos, audio, or interactive elements. Each of the content assets can include information identifying an asset type of each content asset and/or other information that can be used to combine the content assets into a compliant digital component.

In some implementations, the request for content includes a unique identifier indicating that the request is for the test object. For example, as discussed above, the test object can be identified by the unique identifier, such that a request for content that includes the unique identifier constitutes a request for the test object. In these situations, the request is received by a server (e.g., of the DCDS 110), and determines that the request is for content to present in the application. The server also determines that the request for content includes an identifier corresponding to a test environment. For example, the server can determine that the request includes the unique identifier corresponding to the test object. In response to determining that the request for content includes the unique identifier corresponding to the test environment, the server selects the test object including the content assets that are required to render adigital component, and provides the test object to the client device responsive to the content request.

In some implementations, the request for content includes information that can be used to identify the client device that submits the request as a test device of an application developer. For example, as discussed above, the application developer can pre-register their device as a test device with a content distribution system (e.g., the DCDS 110 of FIG. 1). When the client device generates the request for content, the request will include the device identifier of the client device and/or a registration code provided in response to registration of the client device as a test device so that the request can be identified as a request for the test object from a registered test device. In these situations, a server receiving the request can determine that the request includes an identifier corresponding to a test environment. For example, the server can identify a device identifier for the client device and determine that the device identifier is included in a list of registered test devices. Additionally, or alternatively, the server can identify, within the request, a registration code that was generated and provided to the application developer when the client device was registered as a test device. In either case, the server can select the test object, including the content assets that are required to render a digital component, based on the device being identified as a test device. The server then provides the test object to the client device responsive to the request for content based on the client device being identified as a test device.

A test object that includes multiple content assets is received (304). In some implementations, the test object is received by a client device that is being used to test an application. The test object can be passed to the application, for example, by an SDK that is installed on the client device and in communication with the application.

Rendering, provisioning, and/or presentation of a test digital component by an application executing on a client device is detected by the client device (306). In some implementations, the rendering, provisioning, and/or presentation of the digital component is detected by a software development kit that is executing on the client device. The provisioning or presentation of the digital component can be detected by the SDK for example, based on presentation data that is generated by the application and passed to the SDK by the application when the digital component rendered using the test object is displayed. For example, when any digital component is provisioned or otherwise presented in the display of the application, the application can generate data specifying that the digital component has been generated and/or presented. This data can similarly be generated when the test digital component is presented, and used to inform the SDK of the presence of the test digital component.

A set of signals specifying rendering attributes of the test digital component are obtained from the application (308). In some implementations, the set of signals includes at least first signals indicative of visible attributes of content assets that are presented by a digital component rendered using the content assets of the test object. The first set of signals can specify, for example, the content assets that are being presented in the digital component, locations of the content assets within the test digital component, sizes of the content assets as presented within the digital component, and/or other data that provides information about how the content assets are visually presented within the digital component.

The set of signals can also include second signals indicative of hierarchical associations between the content assets. For example, the set of signals can specify user interface views to which content assets are bound and the hierarchical relationships between different user interface views. More specifically, the set of signals can specify, for each content asset, the user interface view to which the content asset is bound and the hierarchical relationships between the different user interface views that were generated by the rendering code to generate the test digital component.

A user interface view (or simply view) is a building block for user interface components. A view occupies a rectangular area on the screen and are used to create UI components. The views are arranged in a hierarchical tree structure that defines dependencies of the views on other views. Some settings for a parent view will be inherited by their child views (e.g., lower level views in the hierarchical tree structure). As such, the hierarchical associations between the content assets can be used in combination with the first signals to determine whether the content assets have been rendered correctly by the rendering code.

A validation process is invoked (310). In some implementations, the validation process compares the set of signals obtained from the application with a set of compliance requirements. Note that compliance requirements are also referred to as requirements. The set of compliance requirements specify attributes of compliant digital components. In some situations, the set of compliance requirements can specify, for example, a particular type of view (or other user interface element) that is required to be used to display a particular type of content asset, content assets that are required to be presented within the digital component, a minimum size and/or resolution of the digital component and/or specific types of content assets, restrictions on interactive elements (e.g., particular types of content assets that cannot be interactive or particular interactive elements that must be enabled), locations of content assets within a specified view, and/or a required hierarchical level of views for specified content assets.

The validation process is invoked, for example, by an SDK executing on a device, such as a mobile device or tablet device. In some situations, invoking the validation process can include the SDK carrying out the operations of the validation process (e.g., the comparison of the set of signals to the set of compliance requirement). In some situations, invoking the validation process can include the SDK requesting execution of the validation process by a script that is not included as part of the SDK. The script can be installed on the same device as the SDK, and instantiated at the launch of the application or when the device is powered up. Alternatively, the script could be installed on a separate device (e.g., other than the device executing the SDK. In either case, the SDK can pass the set of signals specifying rendering attributes of the test digital component to the script with a request for the set of signals to be evaluated with reference to the set of compliance requirements.

A determination is made whether the set of signals satisfies the set of compliance requirements (312). The determination can be made, for example, by either the SDK or a script that is separate from (i.e., not part of) the SDK. A potential advantages of having a separate script perform the evaluation process that is used to determine whether the set of compliance requirements are met is that the script can be updated without requiring the entire SDK to be updated. This provides more flexibility in updating and/or modifying the evaluation process that is used to evaluate applications (e.g., based on policy changes and/or newly identified aspects that need to be checked, such as a newly discovered error type). For purposes of example, the following description assumes that the script performs the evaluation process, but the following description is also applicable to implementations in which the validation process is carried out by the SDK.

The determination can be made through a validation process that compares the set of signals to the set of compliance requirements. For example, the script can identify a particular compliance requirement and determine whether the set of signals satisfy that particular compliance requirement. In a specific example, the compliance requirement can specify that a particular content asset must be present and successfully registered with the SDK in a specified manner. In this example, the script can determine whether the set of signals includes data specifying that the particular content asset is present in the test digital component, as rendered by the rendering code. When data specifying that the particular content asset is present within the test digital component, the script can determine that this aspect of the compliance requirements is satisfied. When the set of signals lacks data specifying that the particular content asset is present within the test digital component, the script can determine that this aspect of the compliance requirements is not satisfied.

Continuing with this example, the script can further determine whether the set of signals includes data indicating that the particular content asset was successfully (or properly) registered with the SDK. When data specifying that the particular content asset was successfully (or properly) registered with the SDK, the script can determine that this aspect of the compliance requirements is satisfied. When the set of signals lacks data specifying that the particular content asset was successfully (or properly) registered with the SDK, the script can determine that this aspect of the compliance requirements is not satisfied. The script can continue to evaluate the set of signals to determine whether each requirement in the set of compliance requirements are met by (e.g., satisfied by) the set of signals specifying rendering attributes of the test digital component.

The script continues by outputting an evaluation result. In some implementations, the evaluation result indicates whether the test digital component, as rendered by the rendering code of the application, complies with the set of compliance requirements. When the evaluation result indicates that the test digital component meets the set of compliance requirements, the rendering code is classified as compliant rendering code. When the evaluation result indicates that the test digital component fails to meet the set of compliance requirements, the rendering code is classified as non-compliant rendering code.

In some implementations, each separate requirement in the set of compliance requirements must be met in order for the set of compliance requirements to be satisfied, which is referred to as strict compliance. For example, assume that the set of compliance requirements specify five separate requirements of a compliant digital component. In this example, strict compliance will require that the set of signals include data indicating that the test digital component includes the five separate requirements specified by the set of compliance requirements in order for the set of compliance requirements to be satisfied, and for the rendering code to be deemed compliant. Therefore, when the script determines that one or more compliance requirements are not met by the set of signals (e.g., first signals and second signals), the set of compliance requirements will be deemed not met.

In some implementations, only partial compliance is required to satisfy the set of compliance requirements, and in turn, to classify the rendering code compliant. For example, assume that only three of the five requirements must be met to satisfy the compliance requirements. In this example, the set of compliance requirements can be satisfied when the set of signals includes data indicating that the test digital component meets at least three of the five separate requirements in the set of compliance requirements.

In some implementations, the set of compliance requirements can include a mandatory requirements and an optional aspects. The mandatory requirements could be, for example, requirements that relate to the structure of the rendered test digital component and/or content required to be presented in the test digital component. The optional aspects could be, for example, requirements that are indicative of a more pleasing presentation of the test digital component, but not required for the test digital component to be considered properly rendered. In this situation, the set of compliance requirements can be deemed satisfied when the mandatory requirements are met (e.g., satisfied) by the set of signals, even if the optional aspects are not met by the set of signals.

In some situations, a determination that one or more compliance requirements are not met can include a determination that required assets are not included or not properly registered with the software development kit, determining that a particular view that presents the content assets has less than a specified size, or that one or more of the content assets are presented outside of boundaries of the particular view. As discussed above, this determination can be made based on the set of test signals indicating a set of assets that are presented in the test digital component and the corresponding rendering attributes (e.g., location, size, and other visual attributes) of the content assets.

When the set of compliance requirements are determined to be met by the set of signals, a compliant overlay is generated and presented in the application (314). In some implementations, the compliant overlay indicates that the test digital component, as rendered by the rendering code, is a compliant digital component, such that the rendering code is considered compliant. For example, as shown in FIG. 2A, the compliant overlay can indicate that no issues were detected by the debugger (e.g., script). Additionally, or alternatively, the compliant overlay can specifically indicate that the rendering code is compliant.

When the set of compliance requirements are determined to not be met by the set of signals, a non-compliant overlay is generated and presented in the application

(316). For example, in response to determining that one or more compliance requirements are not met, the SDK can provide the non-compliant overlay. The non-compliant overlay presents, within the application, an alert indicating that the test digital component fails to comply with the one or more compliance requirements, such that the rendering code is considered non-compliant. For example, as shown in FIG. 2B, the non-compliant overlay can indicate that issues were detected by the debugger (e.g., script). Additionally, or alternatively, the compliant overlay can specifically indicate that the rendering code is non-compliant.

In some implementations, the non-compliant overlay is generated using a document that is populated with information about the compliance requirements not met by the set of signals. For example, when the SDK obtains information (e.g., from the script) indicating that the set of compliance requirements were not met, the SDK can obtain a form document from a specified location (e.g., a specified network location). The SDK can then populate the document with information indicating that the test digital component fails to comply with one or more of the compliance requirements.

In some implementations, the non-compliant overlay can include interactive elements. For example, the non-compliant overlay can include a link, button, or another interactive user interface element that causes presentation of a page presenting more details about the issues that were detected with the rendered test digital component.

Interaction with the non-compliant overlay is detected (318). In some implementations, interaction with the non-compliant overlay is detected by detecting a tapping or clicking on the interactive element included in the non-compliant overlay.

In response to detecting interaction with the non-compliant overlay, additional details are presented to the user in the application. In some implementations, the additional details can specify how the digital component fails to comply with the one or more compliance requirements. For example, the details presented in response to interaction with the interactive element of the non-compliant overlay can indicate whether the layout of the content assets is likely to lead to accidental clicks on digital components rendered by the rendering code of the application. The details can also indicate whether the resolution of test digital components rendered by the rendering code is too low. The details can also indicate any required content assets (e.g., a source of the digital component) that are not being presented in digital components rendered by the rendering code. The details can also indicate information identifying any content asset that is interactive, but shouldn't be. The details can also indicate when any specified view is too small. Any or all of the details listed above can be included and/or excluded from the information presented following interaction with the non-compliant overlay.

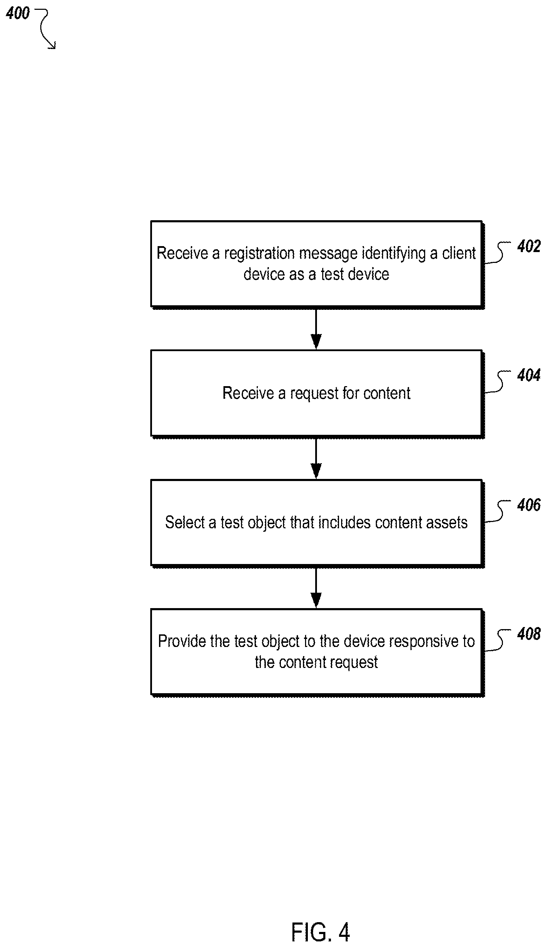

FIG. 4 is a flow chart of an example process 400 for providing a test object to an application executing on a client device. Operations of the process 400 can be performed by one or more computing devices. In some implementations, operations of the process 400 can be implemented as instructions stored on non-transitory computer readable medium. Execution of the instructions can cause one or more computing devices to perform operations of the process 400.

A registration message identifying a client device as a test device is received (402). As discussed above, the message identifying the client device as a test device can include a unique device identifier identifying the device. The device can be registered as a test device using the unique device identifier.

A request for content is received (404). The request for content can be a request for content to present in the application under test. In some implementations, the request will include the device identifier of the client device and/or a registration code provided in response to registration of the client device as a test device so that the request can be identified as a request for the test object from a registered test device. In these situations, a server receiving the request can determine that the request includes an identifier corresponding to a test environment. For example, a server can identify a device identifier for the client device and determine that the device identifier is included in a list of registered test devices. Additionally, or alternatively, the server can identify, within the request, a registration code that was generated and provided to the application developer when the client device was registered as a test device.

In some implementations, the request for content includes a unique identifier indicating that the request is for the test object. For example, as discussed above, the test object can be identified by the unique identifier, such that a request for content that includes the unique identifier constitutes a request for the test object. In these situations, the request is received by a server (e.g., of the DCDS 110), and determines that the request is for content to present in the application. The server also determines that the request for content includes an identifier corresponding to a test environment. For example, the server can determine that the request includes the unique identifier corresponding to the test object. In response to determining that the request for content includes the unique identifier corresponding to the test environment, the server selects the test object including the content assets that are required to render the test digital component, and provides the test object to the client device responsive to the content request.

A test object that includes content assets is selected in response to the request (406). As discussed above, the selected test object can include the content assets that are required for rendering code to render the test digital component.

The test object is provided to the device responsive to the request (408). The test object is provided to the device in an unrendered form. That is, the separate content assets have not been rendered and arranged in the form of the test digital component. Rather the separate content assets are included in the test object and provided to the device for rendering by the rendering code of a native application executing at the device.

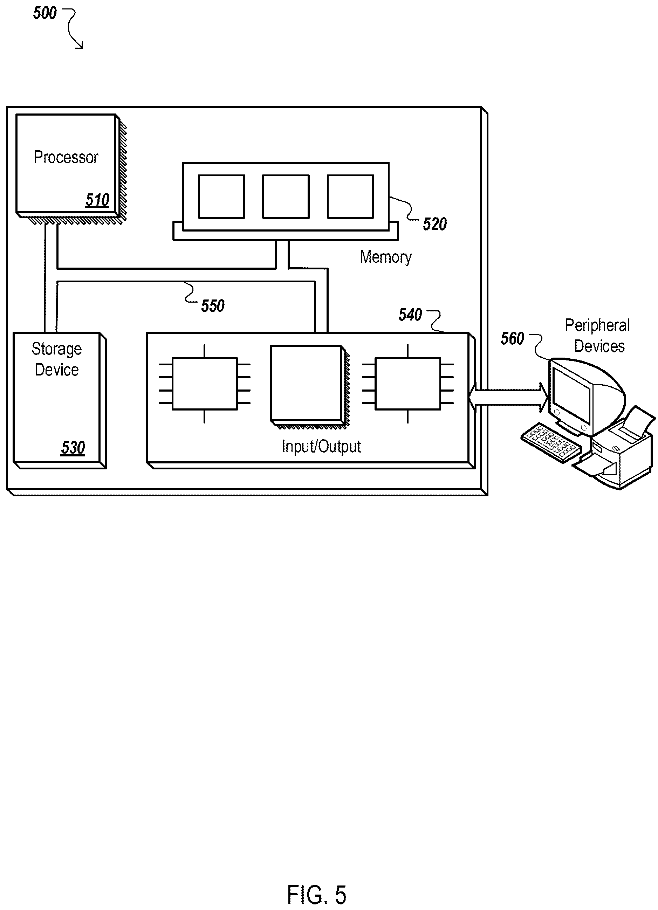

FIG. 5 is block diagram of an example computer system 500 that can be used to perform operations described above. The system 500 includes a processor 510, a memory 520, a storage device 530, and an input/output device 540. Each of the components 510, 520, 530, and 540 can be interconnected, for example, using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 can include, for example, a hard disk device, an optical disk device, a storage device that is shared over a network by multiple computing devices (e.g., a cloud storage device), or some other large capacity storage device.

The input/output device 540 provides input/output operations for the system 500. In one implementation, the input/output device 540 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to peripheral devices 560, e.g., keyboard, printer and display devices. Other implementations, however, can also be used, such as mobile computing devices, mobile communication devices, set-top box television client devices, etc.

Although an example processing system has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document may, but need not, correspond to a file. A document may be stored in a portion of a file that holds other documents, in a single file dedicated to the document in question, or in multiple coordinated files.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be excised from the combination, and the combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. In addition, the processes depicted in the accompanying figures do not necessarily require the particular order shown, or sequential order, to achieve desirable results. In certain implementations, multitasking and parallel processing may be advantageous.

## Claims

1. A method, comprising:
detecting (306), by a device (106), rendering of a discrete unit of digital content (206) by an application executing on the device;
obtaining (308), from the application, a set of signals specifying rendering attributes of the discrete unit of digital content including at least first signals indicative of visible attributes of content portions that are included in the test discrete unit of digital content and second signals indicative of hierarchical associations between the content portions as rendered;
invoking (310), by the device, a validation process that compares the first signals and the second signals to a set of requirements that specify attributes of compliant discrete units of digital content that have been rendered correctly, wherein the comparison to the set of requirements determines whether the discrete unit of digital content complies with specifications of a digital component distribution system that provides the content portions for rendering by the application;
determining (312) that one or more requirements are not met by the first signals or the second signals; and
in response to determining that the one or more requirements are not met, providing (316), by the device, a non-compliant overlay (250) that provides, within the application, an alert indicating that the discrete unit of digital content fails to comply with the one or more requirements.

2. The method of claim 1, further comprising:
receiving (402), by a server (108), a registration message identifying the device (106) as a test device for the application;
receiving (404), from the device, a request for content to provide to the application;
selecting (406), by the server, a test object including the content portions that are required to render the discrete unit of digital content (206) based on the device being identified as a test device; and
providing (408), by the server, the test object to the device responsive to the request for content based on the device being identified as a test device.

3. The method of claim 1, further comprising:
receiving, by a server (108), a request for content to provide to the application;
determining, by the server, that the request for content includes an identifier corresponding to a test environment;
in response to determining that the request for content includes the identifier corresponding to the test environment, selecting, by the server, a test object including the content portions that are required to render the discrete unit of digital content (206); and
providing, by the server, the test object to the device (106) responsive to the content request.

4. The method of claim 1, wherein invoking, by the device (106), a validation process the compares the first signals and the second signals to a set of requirements comprises requesting execution of the validation process by a script instantiated at launch of the application.

5. The method of claim 1, further comprising:
detecting (318) interaction with the overlay; and
in response to detecting interaction with the overlay, providing (320) additional details regarding how the discrete unit of digital content (206) fails to comply with the one or more requirements.

6. The method of claim 1, further comprising:
obtaining, by the device (106), a document from a specified location; and
populating the document with information indicating that the discrete unit of digital content (206) fails to comply with the one or more requirements.

7. The method of claim 1, wherein:
obtaining a set of signals specifying rendering attributes of the discrete unit of digital content (206) comprises obtaining a set of signals indicating a set of content portions included in the discrete unit of digital content (206); and
determining that one or more requirements are not met comprises (i) determining that required portions are not included or not properly registered with the software development kit, (ii) determining that a particular view that includes the content portions has less than a specified size, or (iii) determining that one or more of the content portions are located outside of boundaries of the particular view.

8. A system, comprising:
one or more memory devices; and
one or more processors configured to execute instructions that cause the one or more processors to perform operations comprising:
detecting (306) rendering of a discrete unit of digital content (206) by an application executing on a device (106);
obtaining (308), from the application, a set of signals specifying rendering attributes of the discrete unit of digital content including at least first signals indicative of visible attributes of content portions that are included in the test discrete unit of digital content and second signals indicative of hierarchical associations between the content portions as rendered;
invoking (310), by the device, a validation process that compares the first signals and the second signals to a set of requirements that specify attributes of compliant discrete units of digital content that have been rendered correctly, wherein the comparison to the set of requirements determines whether the discrete unit of digital content complies with specifications of a digital component distribution system that provides the content portions for rendering by the application;
determining (312)that one or more requirements are not met by the first signals or the second signals;
in response to determining that the one or more requirements are not met, providing (316) a non-compliant overlay (250) that provides, within the application, an alert indicating that the discrete unit of digital content fails to comply with the one or more requirements.

9. The system of claim 8, further comprising a server (108) including one or more computing devises, wherein the server is configured to perform operations comprising:
receiving (402) a registration message identifying the device (106) as a test device for the application;
receiving (404), from the device, a request for content to provide to the application;
selecting (406) a test object including the content portions that are required to render the discrete unit of digital content (206) based on the device being identified as a test device;
providing (408) the test object to the device responsive to the request for content based on the device being identified as a test device.

10. The system of claim 1, further comprising a server (108) including one or more computing devises, wherein the server is configured to perform operations comprising::
receiving a request for content to provide to the application;
determining that the request for content includes an identifier corresponding to a test environment;
in response to determining that the request for content includes the identifier corresponding to the test environment, selecting a test object including the content portions that are required to render the discrete unit of digital content (206);
providing the test object responsive to the content request.

11. The system of claim 8, wherein invoking a validation process the compares the first signals and the second signals to a set of requirements comprises requesting execution of the validation process by a script instantiated at launch of the application.

12. The system of claim 8, wherein the instructions cause the one or more processors to perform operations further comprising:
detecting (318) interaction with the overlay; and
in response to detecting interaction with the overlay, providing (320) additional details regarding how the discrete unit of digital content (206) fails to comply with the one or more requirements.

13. The system of claim 8, wherein the instructions cause the one or more processors to perform operations further comprising:
obtaining a document from a specified location; and
populating the document with information indicating that the discrete unit of digital content (206) fails to comply with the one or more requirements.

14. The system of claim 8, wherein:
obtaining a set of signals specifying rendering attributes of the discrete unit of digital content (206) comprises obtaining a set of signals indicating a set of content portions included in the discrete units of digital content (206); and
determining that one or more requirements are not met comprises (i) determining that required portions are not included or not properly registered with the software development kit, (ii) determining that a particular view that includes the content portions has less than a specified size, or (iii) determining that one or more of the content portions are located outside of boundaries of the particular view.

15. A computer storage medium encoded with a computer program, the program comprising instructions that when executed by one or more data processing apparatus cause the one or more data processing apparatus to perform operations according to any of claims 1 to 7.

## Patentansprüche

1. Verfahren, umfassend:
Detektieren (306) des Renderings einer diskreten Einheit eines digitalen Inhalts (206) durch eine auf der Vorrichtung ausgeführte Anwendung durch eine Vorrichtung (106);
Erlangen (308) eines Satzes von Signalen von der Anwendung, die Rendering-Attribute der diskreten Einheit digitaler Inhalte spezifizieren, einschließlich mindestens erster Signale, die sichtbare Attribute von Inhaltsabschnitten angeben, die in der diskreten Testeinheit digitaler Inhalte beinhaltet sind, und zweiter Signale, die hierarchische Zuordnungen zwischen den gerenderten Inhaltsabschnitten angeben;
Aufrufen (310) eines Validierungsprozesses, der die ersten Signale und die zweiten Signale mit einem Satz von Anforderungen vergleicht, die Attribute von konformen diskreten Einheiten digitaler Inhalte spezifizieren, die korrekt gerendert wurden, durch die Vorrichtung, wobei der Vergleich mit dem Satz von Anforderungen bestimmt, ob die diskrete Einheit digitaler Inhalte mit den Spezifikationen eines Verteilungssystems für digitale Komponenten übereinstimmt, das die Abschnitte der Inhalte zum Rendering durch die Anwendung bereitstellt;
Bestimmen (312), dass eine oder mehrere Anforderungen durch die ersten Signale oder die zweiten Signale nicht erfüllt werden; und
als Reaktion auf das Bestimmen, dass die eine oder mehreren Anforderungen nicht erfüllt sind, Bereitstellen (316) eines nicht konformen Overlays (250), das innerhalb der Anwendung eine Warnung bereitstellt, die angibt, dass die diskrete Einheit digitaler Inhalte die eine oder mehreren Anforderungen nicht erfüllt, durch die Vorrichtung.

2. Verfahren nach Anspruch 1, ferner umfassend:
Empfangen (402) einer Registrierungsnachricht, die die Vorrichtung (106) als Testvorrichtung für die Anwendung identifiziert, durch einen Server (108);
Empfangen (404) einer Anforderung für Inhalte, die der Anwendung bereitgestellt werden sollen, durch die Vorrichtung;
Auswählen (406) eines Testgegenstands, der die Abschnitte des Inhalts beinhaltet, die erforderlich sind, um die diskrete Einheit des digitalen Inhalts (206) zu rendern, basierend auf der Vorrichtung, die als Testvorrichtung identifiziert wurde, durch den Server; und
Bereitstellen (408) des Testgegenstands an die Vorrichtung als Reaktion auf die Anforderung von Inhalten basierend darauf, dass die Vorrichtung als Testvorrichtung identifiziert wurde, durch den Server.

3. Verfahren nach Anspruch 1, ferner umfassend:
Empfangen einer Anforderung für Inhalte, die der Anwendung bereitgestellt werden sollen, durch einen Server (108);
Bestimmen, dass die Anforderung von Inhalten einen Bezeichner beinhaltet, der einer Testumgebung entspricht, durch den Server;
als Reaktion auf das Bestimmen, dass die Anforderung von Inhalten den der Testumgebung entsprechenden Bezeichner beinhaltet, Auswählen eines Testobjekts, das die Abschnitte des Inhalts beinhaltet, die erforderlich sind, um die diskrete Einheit des digitalen Inhalts (206) zu rendern, durch den Server; und
Bereitstellen des Gegenstandes an die Vorrichtung (106) als Reaktion auf die Anforderung des Inhalts durch den Server.

4. Verfahren nach Anspruch 1, wobei das Aufrufen eines Validierungsprozesses, der die ersten Signale und die zweiten Signale mit einem Satz von Anforderungen vergleicht, die Anforderung der Ausführung des Validierungsprozesses durch ein Skript umfasst, das beim Start der Anwendung instanziiert wird, durch die Vorrichtung (106).

5. Verfahren nach Anspruch 1, ferner umfassend:
Detektieren (318) der Interaktion mit dem Overlay; und
als Reaktion auf das Detektieren einer Interaktion mit dem Overlay, Bereitstellen (320) zusätzlicher Details darüber, inwiefern die diskrete Einheit digitaler Inhalte (206) die eine oder mehreren Anforderungen nicht erfüllt.

6. Verfahren nach Anspruch 1, ferner umfassend:
Erlangen eines Dokuments von einem spezifizierten Ort durch die Vorrichtung (106); und
Auffüllen des Dokuments mit Informationen, die angeben, dass die diskrete Einheit digitaler Inhalte (206) die eine oder mehreren Anforderungen nicht erfüllt.

7. Verfahren nach Anspruch 1, wobei:
das Erlangen eines Satzes von Signalen, die Rendering-Attribute der diskreten Einheit von digitalem Inhalt (206) spezifizieren, Erlangen eines Satzes von Signalen umfasst, die einen Satz von Inhaltsabschnitten angeben, die in der diskreten Einheit von digitalem Inhalt (206) beinhaltet sind; und
das Bestimmen, dass eine oder mehrere Anforderungen nicht erfüllt sind, (i) das Bestimmen, dass erforderliche Abschnitte nicht beinhaltet sind oder nicht ordnungsgemäß bei dem Softwareentwicklungskit registriert sind, (ii) das Bestimmen, dass eine bestimmte Ansicht, die die Inhaltsabschnitte beinhaltet, weniger als eine spezifizierte Größe hat, oder (iii) das Bestimmen, dass sich einer oder mehrere der Inhaltsabschnitte außerhalb der Grenzen der bestimmten Ansicht befinden, umfasst.

8. System, umfassend:
eine oder mehrere Speichervorrichtungen; und
einen oder mehrere Prozessoren, die dazu konfiguriert sind, Anweisungen auszuführen, die den einen oder die mehreren Prozessoren veranlassen, Vorgänge durchzuführen, die Folgendes umfassen:
Detektieren (306) des Renderings einer diskreten Einheit eines digitalen Inhalts (206) durch eine auf einer Vorrichtung (106) ausgeführte Anwendung;
Erlangen (308) eines Satzes von Signalen von der Anwendung, die Rendering-Attribute der diskreten Einheit digitaler Inhalte spezifizieren, einschließlich mindestens erster Signale, die sichtbare Attribute von Inhaltsabschnitten angeben, die in der diskreten Testeinheit digitaler Inhalte beinhaltet sind, und zweiter Signale, die hierarchische Zuordnungen zwischen den gerenderten Inhaltsabschnitten angeben;
Aufrufen (310) eines Validierungsprozesses, der die ersten Signale und die zweiten Signale mit einem Satz von Anforderungen vergleicht, die Attribute von konformen diskreten Einheiten digitaler Inhalte spezifizieren, die korrekt gerendert wurden, durch die Vorrichtung, wobei der Vergleich mit dem Satz von Anforderungen bestimmt, ob die diskrete Einheit digitaler Inhalte mit den Spezifikationen eines Verteilungssystems für digitale Komponenten übereinstimmt, das die Abschnitte der Inhalte zum Rendering durch die Anwendung bereitstellt;
Bestimmen (312), dass eine oder mehrere Anforderungen durch die ersten Signale oder die zweiten Signale nicht erfüllt werden;
als Reaktion auf das Bestimmen, dass die eine oder mehreren Anforderungen nicht erfüllt sind, Bereitstellen (316) eines nicht konformen Overlays (250), das innerhalb der Anwendung eine Warnung bereitstellt, die angibt, dass die diskrete Einheit digitaler Inhalte die eine oder mehreren Anforderungen nicht erfüllt.

9. System nach Anspruch 8, ferner umfassend einen Server (108), der ein oder mehrere Rechensystem(e) umfasst, wobei der Server dazu konfiguriert ist, Vorgänge durchzuführen, die Folgendes umfassen:
Empfangen (402) einer Registrierungsnachricht, die die Vorrichtung (106) als Testvorrichtung für die Anwendung identifiziert;
Empfangen (404) einer Anforderung für Inhalte, die der Anwendung bereitgestellt werden sollen, durch die Vorrichtung;
Auswählen (406) eines Testgegenstands, der die Abschnitte des Inhalts beinhaltet, die erforderlich sind, um die diskrete Einheit des digitalen Inhalts (206) zu rendern, basierend auf der Vorrichtung, die als Testvorrichtung identifiziert wurde;
Bereitstellen (408) des Testgegenstands an die Vorrichtung als Reaktion auf die Anforderung von Inhalten basierend darauf, dass die Vorrichtung als Testvorrichtung identifiziert wurde.

10. System nach Anspruch 1, ferner umfassend einen Server (108), der ein oder mehrere Rechensystem(e) umfasst, wobei der Server dazu konfiguriert ist, Vorgänge durchzuführen, die Folgendes umfassen:
Empfangen einer Anforderung für Inhalte, die der Anwendung bereitgestellt werden sollen;
Bestimmen, dass die Anforderung von Inhalten einen Bezeichner beinhaltet, der einer Testumgebung entspricht;
als Reaktion auf das Bestimmen, dass die Anforderung von Inhalten den der Testumgebung entsprechenden Bezeichner beinhaltet, Auswählen eines Testobjekts, das die Abschnitte des Inhalts beinhaltet, die erforderlich sind, um die diskrete Einheit des digitalen Inhalts (206) zu rendern;
Bereitstellen des Gegenstandes als Reaktion auf die Anforderung des Inhalts.

11. System nach Anspruch 8, wobei das Aufrufen eines Validierungsprozesses, der die ersten Signale und die zweiten Signale mit einem Satz von Anforderungen vergleicht, die Anforderung der Ausführung des Validierungsprozesses durch ein Skript umfasst, das beim Start der Anwendung instanziiert wird.

12. System nach Anspruch 8, wobei die Anweisungen den einen oder die mehreren Prozessoren veranlassen, Vorgänge durchzuführen, die ferner Folgendes umfassen:
Detektieren (318) der Interaktion mit dem Overlay; und
als Reaktion auf das Detektieren einer Interaktion mit dem Overlay, Bereitstellen (320) zusätzlicher Details darüber, inwiefern die diskrete Einheit digitaler Inhalte (206) die eine oder mehreren Anforderungen nicht erfüllt.

13. System nach Anspruch 8, wobei die Anweisungen den einen oder die mehreren Prozessoren veranlassen, Vorgänge durchzuführen, die ferner Folgendes umfassen:
Erlangen eines Dokuments von einem spezifizierten Ort; und
Auffüllen des Dokuments mit Informationen, die angeben, dass die diskrete Einheit digitaler Inhalte (206) die eine oder mehreren Anforderungen nicht erfüllt.

14. System nach Anspruch 8, wobei:
das Erlangen eines Satzes von Signalen, die Rendering-Attribute der diskreten Einheit von digitalem Inhalt (206) spezifizieren, Erlangen eines Satzes von Signalen umfasst, die einen Satz von Inhaltsabschnitten angeben, die in den diskreten Einheiten von digitalem Inhalt (206) beinhaltet sind; und
das Bestimmen, dass eine oder mehrere Anforderungen nicht erfüllt sind, (i) das Bestimmen, dass erforderliche Abschnitte nicht beinhaltet sind oder nicht ordnungsgemäß bei dem Softwareentwicklungskit registriert sind, (ii) das Bestimmen, dass eine bestimmte Ansicht, die die Inhaltsabschnitte beinhaltet, weniger als eine spezifizierte Größe hat, oder (iii) das Bestimmen, dass sich einer oder mehrere der Inhaltsabschnitte außerhalb der Grenzen der bestimmten Ansicht befinden, umfasst.

15. Computerspeichermedium, das mit einem Computerprogramm codiert ist, wobei das Programm Anweisungen umfasst, die, wenn sie durch ein oder mehrere Datenverarbeitungsgeräte ausgeführt werden, das eine oder die mehreren Datenverarbeitungsgeräte veranlassen, Vorgänge nach einem der Ansprüche 1 bis 7 durchzuführen.

## Revendications

1. Procédé, comprenant :
la détection (306), par un dispositif (106), du rendu d'une unité discrète de contenu numérique (206) par une application s'exécutant sur le dispositif ;
l'obtention (308), à partir de l'application, d'un ensemble de signaux spécifiant des attributs de rendu de l'unité discrète de contenu numérique comportant au moins des premiers signaux indiquant des attributs visibles de parties de contenu qui sont incluses dans l'unité discrète de test de contenu numérique et des seconds signaux indiquant des associations hiérarchiques entre les parties de contenu telles que rendues ;
l'invocation (310), par le dispositif, d'un processus de validation qui compare les premiers signaux et les seconds signaux à un ensemble d'exigences qui spécifient les attributs d'unités discrètes conformes de contenu numérique qui ont été rendues correctement, dans lequel la comparaison à l'ensemble d'exigences détermine si l'unité discrète de contenu numérique est conforme aux spécifications d'un système de distribution de composants numériques qui fournit les parties de contenu pour le rendu par l'application ;
la détermination (312) qu'une ou plusieurs exigences ne sont pas satisfaites par les premiers signaux ou les seconds signaux ; et
en réponse à la détermination que les une ou plusieurs exigences ne sont pas satisfaites, la fourniture (316), par le dispositif, d'une superposition non conforme (250) qui fournit, dans l'application, une alerte indiquant que l'unité discrète de contenu numérique ne parvient pas à être conforme aux une ou plusieurs exigences.

2. Procédé selon la revendication 1, comprenant également :
la réception (402), par un serveur (108), d'un message d'enregistrement identifiant le dispositif (106) comme dispositif de test pour l'application ;
la réception (404), à partir du dispositif, d'une demande de contenu à fournir à l'application ;
la sélection (406), par le serveur, d'un objet de test comportant les parties de contenu qui sont nécessaires pour restituer l'unité discrète de contenu numérique (206) sur la base du dispositif identifié comme dispositif de test ; et
la fourniture (408), par le serveur, de l'objet de test au dispositif en réponse à la demande de contenu sur la base du dispositif identifié comme dispositif de test.

3. Procédé selon la revendication 1, comprenant également :
la réception, par un serveur (108), d'une demande de contenu à fournir à l'application ;
la détermination, par le serveur, que la demande de contenu comporte un identifiant correspondant à un environnement de test ;
en réponse à la détermination que la demande de contenu comporte l'identifiant correspondant à l'environnement de test,
la sélection, par le serveur, d'un objet de test comportant les parties de contenu qui sont nécessaires pour restituer l'unité discrète de contenu numérique (206) ; et
la fourniture, par le serveur, de l'objet de test au dispositif (106) en réponse à la demande de contenu.

4. Procédé selon la revendication 1, dans lequel l'invocation, par le dispositif (106), d'un processus de validation comparant les premiers signaux et les seconds signaux à un ensemble d'exigences comprend la demande d'exécution du processus de validation par un script instancié au lancement de l'application.

5. Procédé selon la revendication 1, comprenant également :
la détection (318) de l'interaction avec la superposition ; et
en réponse à la détection de l'interaction avec la superposition, la fourniture (320) de détails supplémentaires concernant la manière dont l'unité discrète de contenu numérique (206) ne parvient pas à se conformer aux une ou plusieurs exigences.

6. Procédé selon la revendication 1, comprenant également :
l'obtention, par le dispositif (106), d'un document à partir d'un emplacement spécifié ; et
le remplissage du document avec des informations indiquant que l'unité discrète de contenu numérique (206) ne parvient pas à se conformer aux une ou plusieurs exigences.

7. Procédé selon la revendication 1, dans lequel :
l'obtention d'un ensemble de signaux spécifiant les attributs de rendu de l'unité discrète de contenu numérique (206) comprend l'obtention d'un ensemble de signaux indiquant un ensemble de parties de contenu incluses dans l'unité discrète de contenu numérique (206) ; et
la détermination qu'une ou plusieurs exigences ne sont pas satisfaites comprend (i) la détermination que les parties nécessaires ne sont pas incluses ou ne sont pas correctement enregistrées avec le kit de développement logiciel, (ii) la détermination qu'une vue particulière qui comporte les parties de contenu a une taille inférieure à une taille spécifiée, ou (iii) la détermination qu'une ou plusieurs des parties de contenu sont situées en dehors des limites de la vue particulière.

8. Système, comprenant :
un ou plusieurs dispositifs de mémoire ; et
un ou plusieurs processeurs configurés pour exécuter des instructions qui amènent les un ou plusieurs processeurs à réaliser des opérations comprenant :
la détection (306) du rendu d'une unité discrète de contenu numérique (206) par une application s'exécutant sur un dispositif (106) ;
l'obtention (308), à partir de l'application, d'un ensemble de signaux spécifiant des attributs de rendu de l'unité discrète de contenu numérique comportant au moins des premiers signaux indiquant des attributs visibles de parties de contenu qui sont incluses dans l'unité discrète de test de contenu numérique et des seconds signaux indiquant des associations hiérarchiques entre les parties de contenu telles que rendues ;
l'invocation (310), par le dispositif, d'un processus de validation qui compare les premiers signaux et les seconds signaux à un ensemble d'exigences qui spécifient les attributs d'unités discrètes conformes de contenu numérique qui ont été rendues correctement, dans lequel la comparaison à l'ensemble d'exigences détermine si l'unité discrète de contenu numérique est conforme aux spécifications d'un système de distribution de composants numériques qui fournit les parties de contenu pour le rendu par l'application ;
la détermination (312) qu'une ou plusieurs exigences ne sont pas satisfaites par les premiers signaux ou les seconds signaux ;
en réponse à la détermination que les une ou plusieurs exigences ne sont pas satisfaites, la fourniture (316) d'une superposition non conforme (250) qui fournit, dans l'application, une alerte indiquant que l'unité discrète de contenu numérique ne parvient pas à être conforme aux une ou plusieurs exigences.

9. Système selon la revendication 8, comprenant également un serveur (108) comportant un ou plusieurs dispositifs informatiques, dans lequel le serveur est configuré pour réaliser des opérations comprenant :
la réception (402) d'un message d'enregistrement identifiant le dispositif (106) comme dispositif de test pour l'application ;
la réception (404), à partir du dispositif, d'une demande de contenu à fournir à l'application ;
la sélection (406) d'un objet de test comportant les parties de contenu qui sont nécessaires pour restituer l'unité discrète de contenu numérique (206) sur la base du dispositif identifié comme dispositif de test ;
la fourniture (408) de l'objet de test au dispositif en réponse à la demande de contenu sur la base du dispositif identifié comme dispositif de test.

10. Système selon la revendication 1, comprenant également un serveur (108) comportant un ou plusieurs dispositifs informatiques, dans lequel le serveur est configuré pour réaliser des opérations comprenant :
la réception d'une demande de contenu à fournir à l'application ;
la détermination que la demande de contenu comporte un identifiant correspondant à un environnement de test ;
en réponse à la détermination que la demande de contenu comporte l'identifiant correspondant à l'environnement de test, la sélection d'un objet de test comportant les parties de contenu qui sont nécessaires pour restituer l'unité discrète de contenu numérique (206) ;
la fourniture de l'objet de test en réponse à la demande de contenu.

11. Système selon la revendication 8, dans lequel l'invocation d'un processus de validation comparant les premiers signaux et les seconds signaux à un ensemble d'exigences comprend la demande d'exécution du processus de validation par un script instancié au lancement de l'application.

12. Système selon la revendication 8, dans lequel les instructions amènent les un ou plusieurs processeurs à réaliser des opérations comprenant également :
la détection (318) de l'interaction avec la superposition ; et
en réponse à la détection de l'interaction avec la superposition, la fourniture (320) de détails supplémentaires concernant la manière dont l'unité discrète de contenu numérique (206) ne parvient pas à se conformer aux une ou plusieurs exigences.

13. Système selon la revendication 8, dans lequel les instructions amènent les un ou plusieurs processeurs à réaliser des opérations comprenant également :
l'obtention d'un document à partir d'un emplacement spécifié ; et
le remplissage du document avec des informations indiquant que l'unité discrète de contenu numérique (206) ne parvient pas à se conformer aux une ou plusieurs exigences.

14. Système selon la revendication 8, dans lequel :
l'obtention d'un ensemble de signaux spécifiant les attributs de rendu de l'unité discrète de contenu numérique (206) comprend l'obtention d'un ensemble de signaux indiquant un ensemble de parties de contenu incluses dans les unités discrètes de contenu numérique (206) ; et
la détermination qu'une ou plusieurs exigences ne sont pas satisfaites comprend (i) la détermination que les parties nécessaires ne sont pas incluses ou ne sont pas correctement enregistrées avec le kit de développement logiciel, (ii) la détermination qu'une vue particulière qui comporte les parties de contenu a une taille inférieure à une taille spécifiée, ou (iii) la détermination qu'une ou plusieurs des parties de contenu sont situées en dehors des limites de la vue particulière.

15. Support de stockage informatique codé avec un programme informatique, le programme comprenant des instructions qui, lorsqu'elles sont exécutées par un ou plusieurs appareils de traitement de données, amènent les un ou plusieurs appareils de traitement de données à réaliser des opérations selon l'une quelconque des revendications 1 à 7.
